(19)

**Europäisches Patentamt**

**European Patent Office**

**Office européen des brevets**

(11) **EP 3 129 880 B1**

(12) **EUROPEAN PATENT SPECIFICATION**

(45) Date of publication and mention of the grant of the patent:
**13.02.2019 Bulletin 2019/07**

(51) Int Cl.:
*G06F 9/50* (2006.01)    *H04L 29/06* (2006.01)
*H04L 29/08* (2006.01)

(21) Application number: **15722791.9**

(22) Date of filing: **01.04.2015**

(86) International application number:
**PCT/US2015/023937**

(87) International publication number:
**WO 2015/157068 (15.10.2015 Gazette 2015/41)**

(54) **METHOD AND DEVICE FOR AUGMENTING AND RELEASING CAPACITY OF COMPUTING RESOURCES IN REAL-TIME STREAM COMPUTING SYSTEM**

VERFAHREN UND VORRICHTUNG ZUR VERSTÄRKUNG UND FREIGABE DER KAPAZITÄT VON COMPUTERRESSOURCEN IN EINEM ECHTZEIT-STREAM-COMPUTING-SYSTEM

PROCÉDÉ ET DISPOSITIF PERMETTANT D'AUGMENTER ET DE LIBÉRER UNE CAPACITÉ DE RESSOURCES INFORMATIQUES DANS UN SYSTÈME INFORMATIQUE DE FLUX EN TEMPS RÉEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.04.2014 CN 201410140869**

(43) Date of publication of application:
**15.02.2017 Bulletin 2017/07**

(73) Proprietor: **Alibaba Group Holding Limited Grand Cayman (KY)**

(72) Inventors:
• **WANG, Feng**
  **Hangzhou 311121 (CN)**
• **MA, Guowei**
  **Hangzhou 311121 (CN)**

(74) Representative: **Finnegan Europe LLP**
  **1 London Bridge**
  **London SE1 9BG (GB)**

(56) References cited:

• **RAUL CASTRO FERNANDEZ ET AL: "Integrating scale out and fault tolerance in stream processing using operator state management", PROCEEDINGS OF THE 2013 INTERNATIONAL CONFERENCE ON MANAGEMENT OF DATA, SIGMOD '13, 22 June 2013 (2013-06-22), pages 725-736, XP055198732, New York, New York, USA DOI: 10.1145/2463676.2465282 ISBN: 978-1-45-032037-5**

• **SCHNEIDER S ET AL: "Elastic scaling of data parallel operators in stream processing", PARALLEL&DISTRIBUTED PROCESSING, 2009. IPDPS 2009. IEEE INTERNATIONAL SYMPOSIUM ON, IEEE, PISCATAWAY, NJ, USA, 23 May 2009 (2009-05-23), pages 1-12, XP031487481, ISBN: 978-1-4244-3751-1**

• **HEINZE THOMAS ET AL: "Auto-scaling techniques for elastic data stream processing", 2014 IEEE 30TH INTERNATIONAL CONFERENCE ON DATA ENGINEERING WORKSHOPS, IEEE, 31 March 2014 (2014-03-31), pages 296-302, XP032595774, DOI: 10.1109/ICDEW.2014.6818344**

• **MITCH CHERNIACK ET AL: "Scalable Distributed Stream Processing", CIDR 2003, FIRST BIENNIAL CONFERENCE ON INNOVATIVE DATA SYSTEMS RESEARCH, ASILOMAR, CA, USA, JANUARY 5-8, 2003, ONLINE PROCEEDINGS,, 5 January 2003 (2003-01-05), pages 1-12, XP002660848,**

EP 3 129 880 B1

**Description**

**TECHNICAL FIELD**

The present disclosure generally relates to the field of real-time stream computing and, more particularly, to a method and device for augmenting and releasing the capacity of computing resources in real-time stream computing.

**BACKGROUND**

With rapid developments in information technology, available information is expanding at an explosive pace. Further, the pathways by which people acquire information are increasing in variety and in convenience. At the same time, the demand for timely information is increasing. To meet the developments and increasing demands, one primary way for computing and processing massive data is to use distributed-cluster, real-time stream processing systems. Generally, in a real-time stream processing system, massive amounts of real-time data are extracted as separate messages. These messages are then sent to pre-assigned computing units. After one computing unit completes its computation, based on a preset message stream processing sequence (topographical relationship) the computing results are transmitted to subsequent computing units (also called downstream nodes) until message stream processing is complete. A point-to-point transmission synchronous model can be used for message stream transmission between the upstream and downstream computing nodes and a distributed message queue can be used for transmission.

When data volume is stable, generally the above-described distributed stream processing system may use a fixed computing resource. However, in applying real-time data processing scenarios to big data, data stream from upstream data sources often fluctuates. When the system is at a high peak, the data flow increases. And when the system is at a low level, the data flow decreases. On the other hand, adjustments in foreground service logic also cause fluctuations in the data flow. For example, when a shopping website is having a promotional event, seller operations are frequent and there could be unusual increases in commodity change. After the event concludes, the commodity change rate returns to normal. These events cause huge fluctuations in data flow.

Furthermore, a real-time stream processing system cannot predict the likelihood of fluctuations of data flows. In order to meet the demand of data processing in a real-time system, computing resources (i.e., computing nodes) can be allocated based on the system's maximum capacity to process data at a high peak time. Although this method ensures the real-time nature of the system, when the system is in a low data-processing period, large computing resources will be in an idle state and wasted. Further, in a big data scenario in which the data flow fluctuates greatly, the waste of computing resources is even more significant.

In a conventional distributed stream processing system, message extraction and management mostly rely on techniques, such as message splits, message transmission, and other traditional big data concepts. These techniques do not have the ability to automatically monitor how busy the system is. Consequently, they do not have the ability to automatically augment or release computing resources. Thus, to solve the issue caused by huge data-flow fluctuations in the system, it is desired to control operations of computing nodes to adjust the system's computing resources. That is, after discovering that the workload of the system has become larger or smaller, it may need to add new computing nodes to or remove computing nodes from the system, amend the coupling relationship between computing nodes, and modify message splits to augment or release system computing resources. Additionally, stream computing systems that use a point-to-point synchronous model to transmit messages usually has closely coupled upstream and downstream computing nodes. Augmenting or releasing computing resources can affect all upstream and downstream computing nodes. Because these modifications change the global topological structure, generally it is desired to first stop existing services to modify the topological allocation and then resume service again. These measures complicate the entire processing system and consume a significant amount of time.

"Integrating Scale Out and Fault Tolerance in Stream Processing using Operator State Management" by Fernandez et al., in Proceedings of the 2013 ACM SIGMOD International Conference on Management of Data, pages 725-736, 2013, ACM, New York, NY, USA, DOI: 10.1145/2463676.2465282, discloses an integrated approach for dynamic scale out and recovery of stateful operations, including stream processing systems (SPS) checkpointing externalized operator state and backing it up to upstream virtual machines (VMs).

**SUMMARY**

Consistent with some embodiments, this disclosure provides a method for augmenting the capacity of computing resources in a real-time stream computing system. In the system, computing tasks are transmitted by distributed message queues. The method is performed by a processor and comprises acquiring a processing status of a first computing unit of the system in processing a first message split cluster included in a computing task and transmitted by the distributed message queue for processing by the first computing unit. The first message split cluster contains a plurality of message splits, each of the message splits containing one or more messages. The processing status includes a message processing progress of the first computing unit and a number of messages processed by the first computing unit per second, the message processing progress being a difference between a first time at which a message is processed by the first computing unit and a time at which the message is generated. The method includes, upon determining based on the acquired processing status that the first computing unit has a workload exceeding pre-determined conditions, ranking each message split comprised in the first message split cluster according to the number of messages contained in the message split, and splitting the first message split cluster into a number of message split clusters by allocating the message splits from the first message split cluster into the message split clusters based on the ranking of the message splits in the first message split cluster; and assigning the message split clusters to a number of second computing units for processing, the number of second computing units corresponding to the number of message split clusters.

Consistent with some embodiments, this disclosure provides a device for augmenting the capacity of computing resources in real-time stream computing. The device includes a processing status acquisition sub-unit configured to acquire a processing status of a first computing unit in processing a first message split cluster included in a computing task and transmitted via a distributed message queue for processing by the first computing unit, wherein the first message split cluster contains a plurality of message splits, each of the message splits containing one or more messages, and the processing status includes a message processing progress of the first computing unit and a number of messages processed by the first computing unit per second, the message processing progress being a difference between a first time at which a message is processed by the first computing unit and a time at which the message is generated; a workload determination sub-unit configured to determine, based on the acquired processing status, whether the first computing unit has a workload that exceeds pre-determined conditions; a computing task split unit configured to rank each message split comprised in the first message split cluster according to the number of messages contained in the message split, and split the first message split cluster into a number of message split clusters from the first message split cluster by allocating the message splits from the first message split cluster into the message split clusters based on the ranking of the message splits in the first message split cluster; and a task assignment unit configured to assign the split message clusters to a number of second computing units for processing, the number of second computing units corresponding to the number of message split clusters.

## BRIEF DESCRIPTION OF THE DRAWINGS

The accompanying drawings, which are incorporated in and constitute a part of this specification, illustrate embodiments consistent with the invention and, together with the description, serve to explain the principles of the invention.

Figure 1 is a schematic diagram showing some technical aspects to achieve the technical results in the present disclosure.

Figure 2 is a flowchart of an exemplary method for augmenting the capacity of computing resources in real-time stream computing consistent with some embodiments of this disclosure.

Figure 3 shows a time sequence diagram of a computing unit processing messages consistent with some embodiments of this disclosure.

Figure 4 is a schematic diagram of an exemplary splitting process consistent with some embodiments of this disclosure.

Figure 5 is a flowchart of an exemplary method consistent with some embodiments of this disclosure.

Figure 6A shows an exemplary device consistent with some embodiments of this disclosure.

Figure 6B shows an exemplary workload determination unit consistent with some embodiments of this disclosure.

Figure 6C shows an exemplary task assignment unit consistent with some embodiments of this disclosure.

Figure 7 is a schematic diagram of an exemplary merging process consistent with some embodiments of this disclosure.

Figure 8A is a flowchart of an exemplary method for releasing computing resources consistent with some embodiments of this disclosure.

Figure 8B is a flowchart of an exemplary method for releasing computing resources consistent with some embodiments of this disclosure.

Figure 8C is a flowchart of an exemplary method for releasing computing resources consistent with some embodiments of this disclosure.

Figure 9 is a flowchart of an exemplary method for merging computing tasks consistent with some embodiments of this disclosure.

Figure 10A shows an exemplary device for merging computing tasks consistent with some embodiments of this disclosure.

Figure 10B shows an exemplary resource merger determination unit consistent with some embodiments of this disclosure.

Figure 10C shows an exemplary merged task assignment unit consistent with some embodiments of this disclosure.

Figure 11 shows an exemplary computer consistent with some embodiments of this disclosure.

**DESCRIPTION OF THE EMBODIMENTS**

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

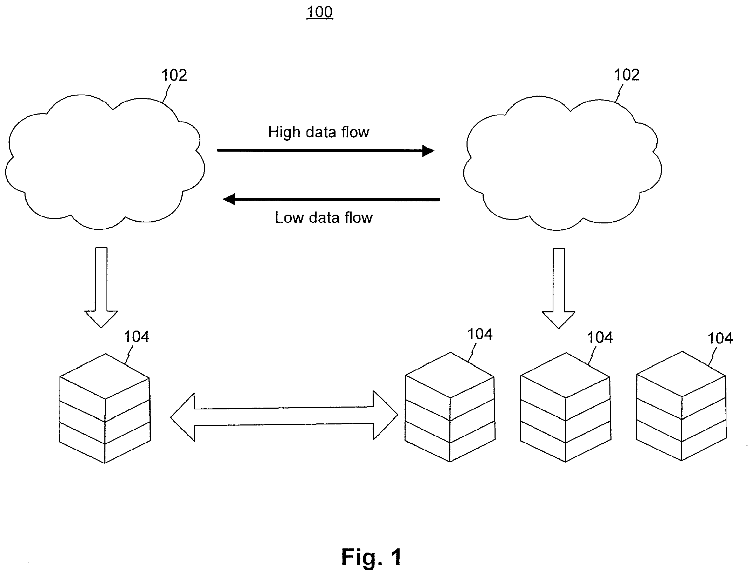

Figure 1 is a schematic diagram showing some technical aspects to achieve the technical results in the present disclosure.

As shown in Figure 1, a real-time stream computing system 100 uses a distributed message queue 102 to transmit computing tasks. The following describes some exemplary technical results consistent with the present disclosure. System 100 automatically detects that a computing unit 104 has too many tasks, i.e., the volume of the distributed message queue 102 is at a high peak. The number of computing units 104 is then automatically increased, as shown on the right side of Figure 1. Further, when the volume of the distributed message queue 102 is low, it is similarly possible that system 100 detects this condition and automatically reduces the number of computing units 104, as shown on the left side of Figure 1.

Consistent with some embodiments of this disclosure, a method to augment the computing resources and a method to release computing resources in real-time stream computing are provided. Both of these methods include adjusting the number of computing units 104, i.e., computing resources, based on computing tasks transmitted through the distributed message queue 102. In the former, computing resources are increased when computing tasks become larger; in the latter, computing resources are reduced when computing tasks become smaller.

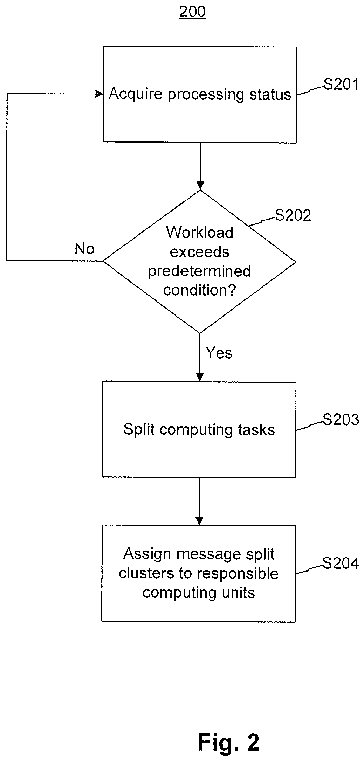

Figure 2 is a flowchart of an exemplary method 200 for augmenting the capacity of computing resources in real-time stream computing consistent with some embodiments of this disclosure. Figure 2 shows various steps performed in a real-time stream computing system.

Referring to Figure 2, in step S201, the system acquires a status of each of the computing units in processing a message split cluster.

Referring back to Figure 1, each computing unit 104 acquires computing tasks through the distributed message queue 102. The message queue 102 includes a number of messages arranged in a queue. To facilitate task assignment, the messages are split to form message splits. One message split may contain a plurality of messages, and the number of messages contained in each message split is called the split message number (SplitIOPs). One message queue may contain a number of message splits and can be called a message split cluster. In the description below, message queues 102 to be processed by the computing units 104 will be called message split clusters.

In some embodiments, the status of the computing units 104 in processing the message split clusters may include certain indicators for measuring the workload of the computing units 104. Exemplary indicators may include an indicator for indicating a message processing progress of the computing unit 104 in processing the computing tasks and an indicator for indicating a number of messages processed by the computing unit 104 per second (TPS).

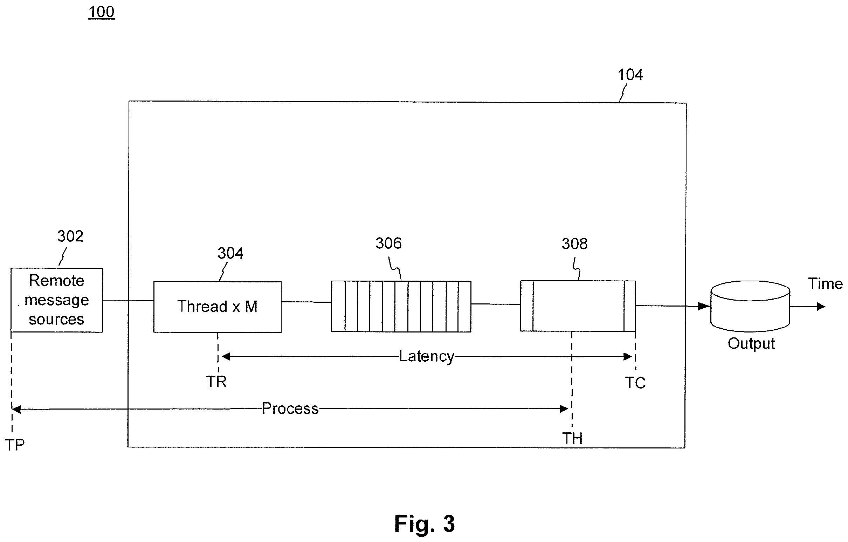

Figure 3 shows a time sequence diagram of a computing unit for processing messages. With reference to Figure 3, the indicators of message processing progress of the computing unit 104 and the number of messages processed by the computing unit 104 per second will be explained below.

In Figure 3, each piece of information processed by the stream computing system 100 is called a message. A computing unit 104 receives messages from one or more remote message sources 302. Each message has a production time TP at which the message is created or generated. The system 100 receives the message at time TR, and the message is completely processed by computing unit 104 at time TC.

Message processing progress P can be defined, for example, as a difference between a time TH when a message is processed and the message production time TP in the stream computing system 100. If P is larger than a threshold value set in the system, then it is called "process delay"; otherwise, it is called "normal process." The threshold value can be set according to the time that one computing unit uses for processing a message within a normal computing workload. If there are more computing tasks assigned to a computing unit 104, processing progress P of the computing unit 104 could exceed the threshold value. If a computing unit 104 receives fewer computing tasks, its processing progress P could be lower than the threshold value.

Referring to Figure 3, each computing unit 104 may include one or more of threads 304 for reading messages from remote message sources 302. To define the number of messages processed by the computing unit 104 per second (TPS), the number of threads 304 contained in the computing unit 104 and a time for processing a message in the computing unit 104, i.e., latency, are considered. A detailed explanation is provided below.

In a stream computing system 100, the time required for processing one message is called "latency." In some embodiments, latency equals to TC-TR, the unit of which is generally ms. Under a normal workload, latency of a computing unit 104 usually has a mean value. In the descriptions below, latency is used to represent this mean value and is not the actual time for the computing unit 104 to finish processing a specific message.

The computing unit 104 in a real-time stream computing system 100 processes N message splits. Each message split can be read by one thread 304 of computing unit 104. Generally, a computing unit 104 utilizes multiple threads to read message splits concurrently. The number of threads in a computing unit 104 is M shown in Figure 3. There is no correlation between the quantities of N message splits and M threads. Generally, N is much greater than M.

To obtain the number of messages processed per second, the latency of one message processed by the computing unit 104 and the number of threads 304 in the computing unit 104 are taken into consideration. An exemplary equation is shown as follows:

$$\text{Theoretical number of messages processed per second (theoretical TPS)} =$$

$$1000/\text{Latency}*\text{M}.$$

The theoretical TPS is acquired based on the relevant parameters of the computing unit 104 and not the number of messages actually processed per second by the computing unit 104.

Actual TPS is an actual number of messages processed by the computing unit 104 per second.

Referring to Figure 3, the received message splits form a distributed message queue 306, which are then processed at one or more processors 308.

Referring back to Figure 2, in step S201, the actual message processing progress and the actual TPS of a computing unit 104 can be employed to determine the processing status of the computing unit 104.

In step S202, the system 100 determines whether there is a computing unit 104 that has a workload exceeding a pre-determined condition based on the above-described processing status of the computing unit 104. If it is determined that the workload exceeds the pre-determined condition (Yes), the method proceeds to step S203. If it is determined that the workload does not exceed the pre-determined condition (No), the method returns to step S201.

An exemplary method for determining the processing status of the computing unit 104 includes determining whether the following three conditions exist for the computing unit 104:

A. The message processing progress of the computing unit 104 is greater than a pre-determined progress threshold value;

B. A number of messages the computing unit 104 processes per second is greater than or equal to the theoretical value of the TPS; and

C. A total number of computing units 104 in work is less than a pre-determined maximum number of computing units 104.

The progress threshold value in condition A is pre-determined based on a measured processing progress parameter when the computing unit 104 operates in a normal condition. If message processing progress is greater than the pre-determined progress threshold value, the computing unit 104 can be determined that it is in a progress delay, and the system may need to add computing resources, i.e., to augment computing resources.

If condition B exists, it means that the workload of the computing unit 104 is too large and the system may need to add computing resources.

Condition C is used to determine whether there are computing units that can be used to augment computing resources. If the total number of computing units in work is equal to the pre-determined maximum value, then it is not possible to add computing units in the current system. That is, even if delays in progress are likely and the workload of computing units is too big, no resources are available to augment computing resources.

If it is determined that there is no computing unit 104 that has a workload exceeding pre-determined conditions (e.g., satisfying the above-described conditions A, B, and C), then the method returns to step S201 and continues to monitor the status of the computing unit 104 in processing message split clusters. Before returning to step S201, in some embodiments, the system 100 may delay for a time period, in order to reduce resources for monitoring the processing status.

In step S203, the system 101 splits computing tasks transmitted through the distributed message queue and to processed by the computing unit 104 that has a workload exceeding the pre-determined conditions.

According to one embodiment, the present disclosure provides an example of splitting a set of computing tasks to be processed by one computing unit, into two groups to be processed by two computing units (responsible computing units) to explain the process of splitting computing tasks. In some embodiments, it is also possible to split a set of computing tasks into three or four groups. But, generally, the method of splitting one set of computing tasks into two groups is simpler and can achieve augmenting computing resources.

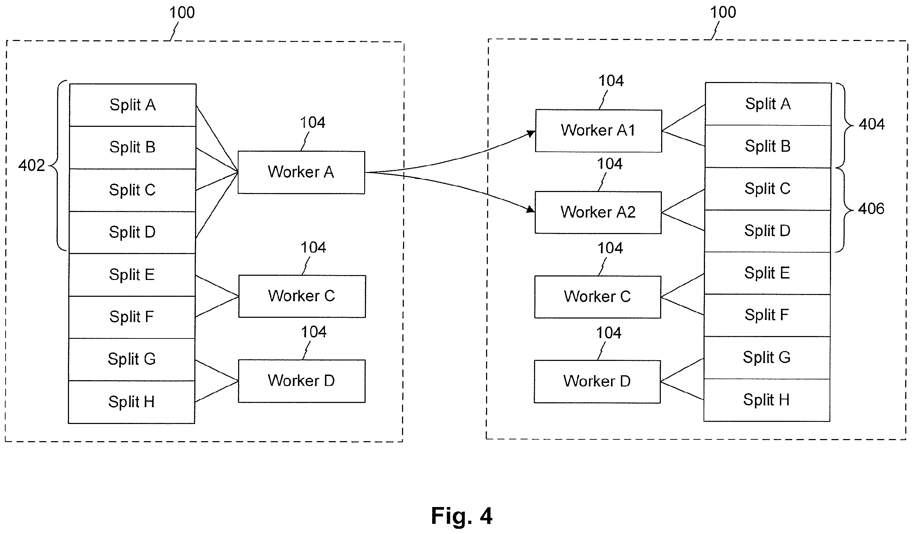

In splitting computing tasks transmitted through the distributed message queue, a message split is treated as one unit. Figure 4 is a schematic diagram of an exemplary splitting process.

In the splitting process, a first step is to split the message split cluster to be processed by the computing unit 104 into two message split clusters. Referring to Figure 4, computing unit Worker A is responsible for processing a message split cluster 402 that includes four message splits Split A - Split D. After splitting, a first message split cluster 404 including Split A and Split B and a second message split cluster 406 including Split C and Split D are formed. In some embodiments, in the splitting process, the first message split cluster 404 and the second message split cluster 406 can contain a substantially equal number of messages, so that the workload of the responsible computing units that will process the two message split clusters 404, 406 are approximately equal.

Referring back to Figure 2, in step S204, the systems 100 assigns the message split clusters 404, 406 to responsible computing units, where the number of the responsible computing units may correspond to the new number of clusters for further processing.

As shown in Figure 4, after splitting is completed, the two message split clusters 404, 406 are assigned to the two computing units, Worker A1 and Worker A2, respectively, for processing.

In some embodiments, the assignment of message split clusters can involve three steps as shown below.

First, the system 100 sends a stop command to Worker A having workload exceeding a predetermined condition, instructing it to stop processing the current message split cluster.

Second, the system 100 prepares computing tasks, i.e., message split clusters 404, 406, for each of the computing units responsible for further processing the computing tasks.

The system 100 sends a command to computing unit 104, such as Worker A in Figure 4, having a workload exceeding pre-determined conditions to stop processing a message split cluster, causing Worker A to stop processing. Before the command is sent, the system 100 may determine that other computing units are available to take over the computing tasks of Worker A. Otherwise, computing resources may be wasted. At the same time, the system 100 prepares message split clusters for the two computing units, Worker A1 and Worker A2, responsible for processing the message split cluster of Worker A. For example, as shown in Figure 4, Split A and Split B of a first message split cluster 404 are assigned to Worker A1 for processing, and Split C and Split D of a second message split cluster 406 are assigned to Worker A2 for processing.

Third, the system 100 sends a start command to the two computing units, Workers A1 and A2, so that they may begin processing the computing tasks assigned to them.

After the assigned computing tasks are prepared, the system 100 can have computing units, Worker A1 and Worker A2, begin processing the respective message split clusters assigned to them. In some embodiments, the system 100 may send a start command to these two computing units to cause them to start processing the respective message split clusters 404, 406.

With the above described exemplary method, the message split cluster of an original computing unit is split into two and processed by two responsible computing units, thereby augmenting computing resources.

In some embodiments, the new computing tasks produced by the splitting method can be assigned to idle computing units for processing, which are different from the original computing unit. They can also be assigned to one idle computing unit and the original computing unit for processing as long as the number of computing units corresponds to the number of the message split clusters.

For example, referring to Figure 4, two message split clusters 404, 406 from the original computing unit, Worker A, can be assigned to two idle computing units, i.e., Worker A1 and Worker A2. In other embodiments, the two message split clusters 404, 406 can be assigned to one idle computing unit (Worker A1) for processing, and to the original computing unit (Worker A) for processing. That is, Worker A and Worker A1 will be responsible for processing the original computing tasks of Worker A. Although two examples of selecting computing units to process the new message split clusters are described above, methods of selecting new computing units are not limited as long as they do not deviate from the concept of the present disclosure.

In some embodiments, the new message split clusters produced by the splitting method may contain substantially equal number of messages to improve processing efficiency. Because the number of messages included in a message split is not always the same, this disclosure also provides methods to make the number of messages in each of the new message split clusters substantially equal. An exemplary method is described in detail below.

As discussed above, the message split cluster of a computing unit having workload exceeding pre-determined conditions will be split into multiple new message split clusters. Different splitting methods may result in splitting the original cluster into different numbers of new clusters. In some embodiments, because the system 100 performs real-time monitoring of the system, it can obtain real-time processing status of each of the original computing units 104 in processing message split clusters. This makes it possible to promptly discover whether the system 100 is in an overloaded state and to accurately locate overloaded computing units whose computing tasks may need to be split. In this case, the original message split cluster to be processed by an original computing unit is split into two new message split clusters for further processing, which can effectively relieve workload pressure on the original computing unit.

Different splitting methods can be employed to split the original message split cluster based on specific needs. Generally, the basic subject for a computing unit 104 to process in a real-time stream processing system 100 is a message. The more messages are there for processing, the busier the computing unit is. Therefore, this disclosure provides an exemplary algorithm for splitting a message split cluster based on a number of messages, to split the original message split cluster to be processed by the original computing unit, into two message split clusters each having a number of messages as equal as possible. That is, the two new message split clusters contain substantially equal number of messages. The exemplary algorithm is provided in detail below.

There may be plenty of methods to split the original message split cluster (e.g., original message split cluster 402 as shown in Figure 4) to be processed by a computing unit having a workload exceeding pre-determined conditions into two clusters, a first message split cluster 404 and a second message split cluster 406. If the system tries all possible splitting methods to find a splitting method that satisfies the requirements, the efficiency can be relatively low. In order to efficiently split the message split cluster, the present disclosure provides a method in which the message splits of the original message split cluster are sorted according to the number of the messages contained in each of the message splits. For example, the message splits may be sorted and ranked from one that has the smallest number of messages (smallest message split) to one that has the largest number of messages (largest message split). The system 100 may then begin to put message splits, beginning from the smallest message split, along the rank from small to large, into the first message split cluster 404, which initially is empty. As long as the number of messages accumulated in the first message split cluster 404 is less than one half of the total messages of the original message split cluster 402, the system 100 can continue to add message splits in the first message split cluster 404. When the messages accumulated in first message split cluster 404 is more than one half of the messages of the original message split cluster 402, the system 100 stops adding message splits to first message split cluster 404, which completes the making of first message split cluster 404. The rest of the message splits can be allocated to the second message split cluster 406.

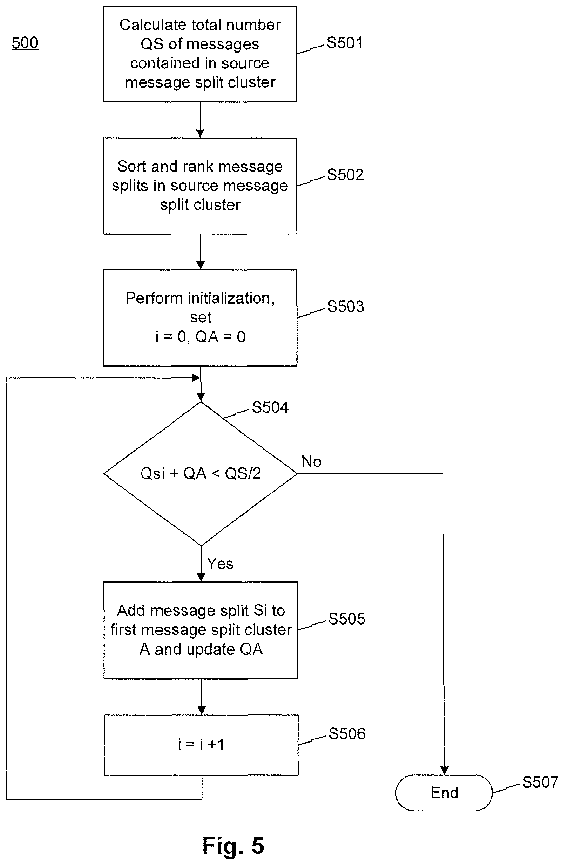

With the above-described method to split the original message split cluster 402, it is not necessary to exhaust all possible splitting methods to find the most efficient one. It is not necessary to perform multiple runs of sorting, but to execute one linear sorting to substantially equally split the original message split cluster 402 into two new clusters 404, 406. That means the system 100 needs to perform one splitting process, which avoids the use of a splitting method dependent entirely on manual operation, which tends to lead to uneven splitting of the original message split cluster 402 and multiple try-and-errors. Figure 5 shows an exemplary flowchart of the steps of this splitting algorithm 500.

In step S501, the total number QS of messages contained in the original message split cluster 402 is calculated.

In step S502, message splits in the original message split cluster 402 are sorted and ranked from small to large based on the number of messages contained in each of the message splits. The cluster after sorting is S; $S_i$ represents the ith message split contained in S; $Q_{si}$ is the number of messages contained in $S_i$ message split; and SN is the total number of message splits contained in S.

In step S503, initialization is performed, where i = 0 is set, first message split cluster 404 and second message split cluster 406 are empty (i.e., containing no message splits), the number of messages in cluster A 404 is zero ($Q_A$ = 0).

In step S504, it is determined whether $Q_{si} + Q_A < QS/2$ is true. If it is true (Yes), the process moves to step S505; otherwise (No), it moves to step S507.

In step S505, message split $S_i$ is added to the first message split cluster 404 and $Q_A$ is updated.

In step S506, the system performs i = i + 1 and returns to step 504.

In step S507, the splitting process ends, and the message splits of cluster 404 is subtracted from original cluster S to obtain another new cluster 406.

When the splitting algorithm does not satisfy $Q_{si} + Q_A < QS/2$ in step S504, the splitting process can be ended. This is because when the message splits are ranked from small to large according to the number of messages contained in the message splits, the message split that is ranked after message split $S_i$ must be greater than or equal to $Q_{si}$. Therefore, when $S_i$ cannot satisfy $Q_{si} + Q_A < QS/2$, any message splits that are ranked after $S_i$ cannot satisfy the requirement $Q_{si} + Q_A < QS/2$, either. Under the circumstances, it is not necessary to continue to repeat steps S504-S506, and the splitting process stops.

In the algorithm discussed above, the original message split cluster to be processed by the computing unit having a workload exceeding predetermined conditions is split into two new clusters. In other embodiments, the system can split the original message split cluster into three or more new clusters and assign them to a number of computing units corresponding to the number of new clusters. That is, assign three clusters to three computing units, for example. The system may perform the splitting method based on its detection of process delay of the computing units or other data reported by the computing unit, and determines that there is a trend of a rapid increase in data flow in the system.

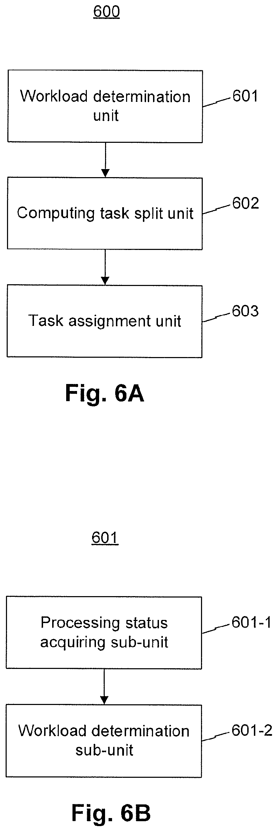

The present disclosure also provides a device for augmenting the capacity of computing resources in real-time source computing. An exemplary device 600 is shown in Figure 6A. Referring to Figure 6A, device 600 includes a workload determination unit 601, configured to determine whether there is a computing unit having a workload exceeding pre-determined conditions. Device 600 further includes a computing task split unit 602, configured to split computing tasks, transmitted through the distributed message queue, of the computing unit that the workload determination unit 601 determines to have a workload exceeding pre-determined conditions. Device 600 also includes a task assignment unit 603, configured to assign the split computing tasks to a number of computing units corresponding to the number of the message split clusters.

In some embodiments, the computing task split unit 602 may split a message split cluster containing one or more message splits, wherein each of the message splits may contain one or more messages.

In other embodiments, as shown in Figure 6B, the workload determination unit 601 may include a processing status acquisition sub-unit 601-1 and a workload determination sub-unit 601-2.

The processing status acquisition sub-unit 601-1 is configured to acquire the processing status of the computing units in processing message split clusters. The processing status may include a message processing progress of the computing unit and a number of messages processed by the computing unit per second. Message processing progress may be a difference between a time the message is processed by the computing unit and a time the message is generated.

Workload determination sub-unit 601-2 is configured to determine whether there is a computing unit having a workload exceeding pre-determined conditions based on the processing status of the computing units acquired by the -processing status acquisition sub-unit 601-1.

In some embodiments, the workload determination sub-unit 601-2 is configured to determine whether the following three conditions are satisfied.

First, it is determined that the message processing progress of the computing unit 104 is greater than a pre-determined progress threshold value.

Second, it is determined that a number of messages the computing unit 104 processes per second is greater than or equal to the theoretical value of the TPS.

Third, it is determined that the total number of computing units 104 currently in work is less than a pre-determined maximum number of computing units.

In some embodiments, the computing task split unit 602 is configured to split the message split cluster to be processed by the original computing unit into two message split clusters.

Correspondingly, the task assignment unit 603 is configured to assign the two message split clusters respectively to two responsible computing units for processing.

In some embodiments, the computing task split unit 602 is configured to split the message split cluster to be processed by the original computing unit into two message split clusters each containing a substantially equal number of messages.

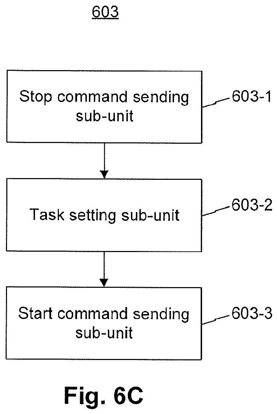

In some embodiments, the task assignment unit 603 includes a stop command sending sub-unit 603-1, a task setting sub-unit 603-2, and a start command sending sub-unit 603-3 shown in Figure 6C.

The stop command sending sub-unit 603-1 is configured to send a command to the computing unit having workloads exceeding the pre-determined conditions, instructing it to stop processing the current message split cluster.

The task setting sub-unit 603-2 is configured to prepare new message split clusters to be processed by the two or more respective computing units;

The start command sending sub-unit 603-3 is configured to send a start command to each of the two or more computing units, instructing them to begin processing the new message split clusters.

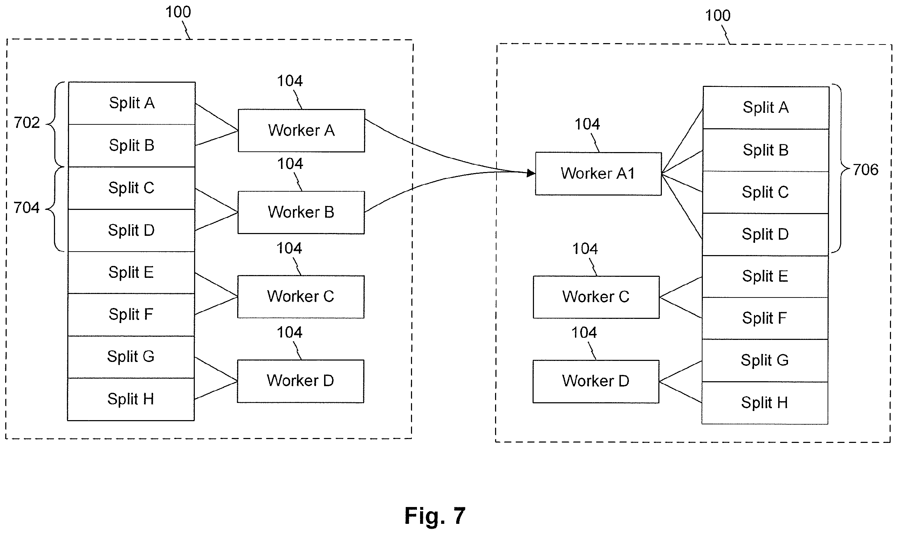

In addition to the above-described methods for increasing the capacity of computing resources in real-time stream computing, the present disclosure further provides a method for releasing computing resources in real-time stream computing. Figure 7 shows an exemplary schematic diagram of releasing computing resources in real-time stream computing.

With reference to Figure 7, technical aspects of releasing computing resources in a real-time stream computing system that uses a distributed message queue to transmit computing tasks will be explained below. A system 100 may automatically detect a workload of computing unit 104 that is too light, i.e., when a data flow volume of the distributed message queue is at a low level. The system 100 determines whether there is a need to merge the computing tasks of the computing units 104 having a workload lighter than pre-determined conditions. The system 100 may use a merger algorithm to merge the tasks 702, 704 of two or more computing units, e.g., Worker A and Worker B, and send the merged task 706 to a computing unit, e.g., Worker A1 for processing. As the number of computing units is reduced, computing resources can be released.

The present disclosure provides a method for releasing computing resources in real-time stream computing as will be described in detail below.

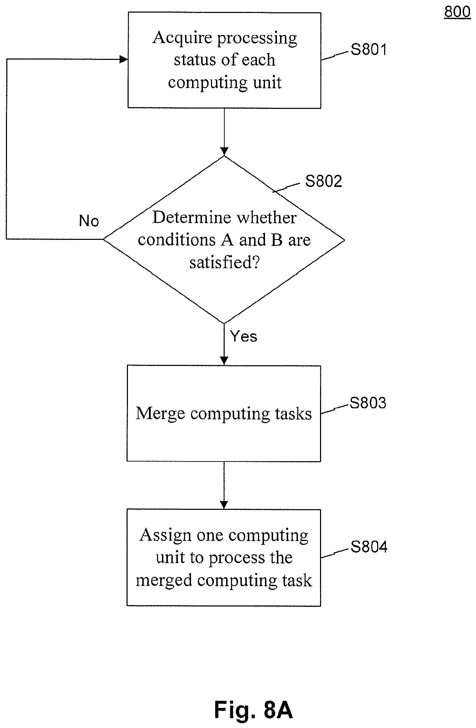

Figure 8A is a flowchart of an exemplary method 800 for releasing computing resources in real-time stream computing.

In step S801, the system 100 acquires a processing status of each of the computing units in processing its message split cluster.

The processing status of the computing units may include indicators for evaluate the workloads of the computing units. Such indicators generally include an indicator indicating a message processing progress of the computing unit 104 and an indicator indicating a number of messages processed per second by the computing unit 104. The meaning of these two parameters has been explained in detail in the embodiment in connection with Figure 3 and is not repeated here.

In step S802, the system 100 determines, based on the processing status of the computing units processing message split clusters, whether the following two conditions are satisfied in the system 100:

A. More than one computing unit 104 has message processing progress less than or equal to a pre-determined progress threshold value; and
B. A total number of computing units 104 in work is greater than a pre-determined minimum number of computing units.

If both of the conditions are satisfied (Yes), the method moves to step S803; otherwise (No), the method returns to step S801 to continue monitoring the processing status.

Condition A above determines whether there is a certain number of computing units having light workload of processing message split clusters in the entire real-time stream computing system. Merger of computing tasks is feasible when at least two computing units (i.e., more than one computing unit) have a light workload.

The progress threshold value is a basis for determining whether the workload of the computing unit is light. This progress threshold value is a similar concept to the progress threshold value discussed in connection with step S202. But because they play different roles in respective embodiments, their values can vary from each other. When the message processing progress of the computing unit 104 is less than the pre-determined progress threshold value, it can be determined that the workload of the computing unit 104 is light. In the entire stream computing system, if more than one computing unit is under this condition, then the system 100 can take measures to release resources.

Condition B is used to determine whether, in the entire real-time stream computing system 100, the total number of computing units in work is larger than a pre-determined minimum number of computing units 104. The operation of a real-time stream computing system 100 usually needs to consider the fluctuations in in-coming computing tasks. To avoid passively increasing computing resources in response to the fluctuations, the system 100 generally would maintain a minimum number of computing units for processing tasks. Condition B is used to determine whether the computing units 104 in work in the real-time stream computing system 100 meet the requirement. If a total number of computing units in work is already less than or equal to the pre-determined minimum number of computing units, then there is no need to merge computing tasks.

If it is determined that one of conditions A and B is not satisfied, the method returns to step S801 to continue monitoring the processing status of the computing units in processing message split clusters. Before returning to step S801, the system 100 may delay for a time period, to reduce resources consumed in monitoring the processing status.

In step S803, the system merges the computing tasks transmitted through the distributed message queue and to be processed by the computing units that are in a low workload level.

As described in the embodiments above, the computing task includes a message split cluster containing one or more message splits. Each of the message splits contains one or more messages.

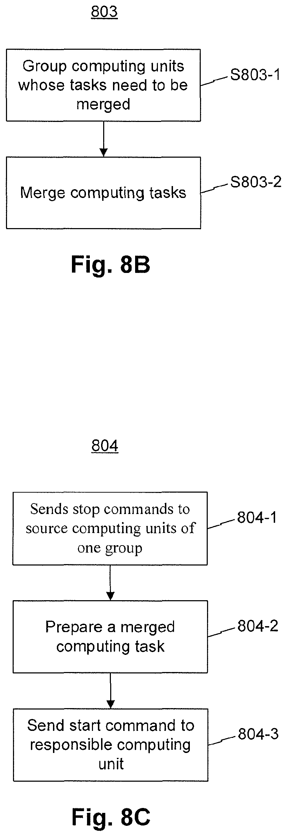

A variety of methods can be employed in order to perform the merger. An exemplary method is provided below with reference to Figure 8B.

In step S803-1, the system 100 groups computing units whose tasks need to be merged.

In some embodiments, each group may include two computing units. It is easier to sort two computing units into one group and that provides great flexibility for the real-time stream computing system 100. In other embodiments, each group may include three or more computing units under certain circumstances.

In grouping the computing units, the system 100 may acquire the number of messages processed per second by each computing unit of one group to ensure that the combined computing task be less than the theoretical number of messages processed per second (theoretical TPS) of the responsible computing unit, which would be assigned to process the combined task. The concept of theoretical TPS has been discussed above. This ensures that the release of resources will not cause subsequent delays in processing computing tasks because the combined task is too large to process timely.

In step S803-2, the system 100 merges the computing tasks transmitted through the distributed message queue and to be processed by the computing units whose computing tasks need to be merged.

In some embodiments, computing tasks to be processed by two computing units are merged into one. The message split cluster formed by the merger will be processed by one responsible computing unit assigned in step S804, discussed below.

In step S804, the system 100 assigns one computing unit to process the merged computing task.

Step 804 may include three sub-steps as shown in Figure 8C.

Referring to Figure 8C, in step S804-1, the system 100 sends stop commands to the computing units of one group, instructing the computing units to stop processing original message split clusters. In step S804-2, the system 100 prepares a merged computing task for a responsible computing unit assigned to process the merged computing task. In step S804-3, the system 100 sends a start command to the responsible computing unit, instructing it to begin processing the merged computing task.

When the computing units stop processing the message split clusters, it is possible to avoid repeated processing of tasks and a waste of computing resources. The system 100 also prepares the merged computing task (a message split cluster) for the responsible computing unit. The original message split clusters to be processed by the two original computing units of one group are merged into one message split cluster.

The start command is sent to the responsible computing unit responsible for processing the merged computing tasks to enable the responsible computing unit to begin processing the merged message split cluster.

In some embodiments, the merged computing task is either assigned to an idle computing unit different from the original computing units for processing or to one of the original computing units for processing. Both ways of assignment can achieve the objective of releasing computing resources, and consistent with the embodiments of this disclosure. However, the assignment method is not limited to these methods.

In other embodiments, the system may determine all of the computing units having a workload lighter than predetermined conditions, merge their computing tasks into one, and assign the merged computing task to a responsible computing unit. This method is simple and can release many computing resources because one responsible computing unit now processes the merged computing task which would have been processed by two or more original computing units. Although this method may release many computing resources, the merged computing task might be too large and cause the responsible computing unit responsible for processing the merged computing task to be overloaded, resulting in a need to subsequently perform additional splitting operations. In order to avoid this problem, this disclosure provides a method for grouping computing units. Exemplary methods for grouping computing units are described below.

First, the system divides computing units whose computing tasks need to be merged into a plurality of groups. The system then merges the computing tasks of the computing units of each group. As discussed above, the computing tasks (message split clusters) are transmitted through the distributed message queues to the computing units. The system may avoid having too many computing units in one group and generating a merged computing task that is too large for a computing unit to process. Different grouping strategies can be employed for grouping computing units. For example, grouping can be performed based on a number of messages processed by the computing units or the processing status of the computing units in processing message split clusters. Size of each of the groups can also vary. For example, in some embodiments, each group may contain three computing units. In other embodiments, each group may include two computing units.

This disclosure contemplates above technical aspects in providing embodiments. For example, computing units whose computing tasks need to be merged are divided into one or more groups. Each group may contain two computing units. In some embodiments, based on acquired processing status data of the computing units of each group, the number of messages processed per second for the two computing units in each group is added, and the sum would be less than the theoretical number of messages processed per second by the responsible computing unit. An exemplary merger algorithm will be described below in greater detail.

As described above, the system may assign two computing units having a light workload to one group. The system may have a variety of ways to assign computing units, and can try various combinations to ensure that the merged computing task obtained by merging computing tasks of the computing units of each group would not overload the computer unit responsible for processing the merged computing task (responsible computing unit). But the efficiency may be relatively low due to the nature of try-and-error. In order to satisfy the requirement that the merged computing task does not exceed the capacity of the responsible computing unit and to increase merger efficiency, in some embodiments, the system may rank all of the computing units based on a number of messages processed per second (RealTPS) of the computing unit, for example, in an order from small to large, to obtain a pool. The system can then select the first computing unit having smallest RealTPS and the last computing unit having the largest RealTPS from the pool. The system adds these two RealTPS and determines whether the sum is smaller than the theoretical TPS of the responsible computing unit. If it is not smaller, the system selects the second largest RealTPS from the pool, adds it to the smallest RealTPS, and determines whether the sum is smaller than the theoretical TPS of the responsible computing unit. These addition and determination operations can continue until the sum is smaller than the theoretical TPS of the responsible computing unit, which means that the two original computing units, corresponding to the RealTPS being added, can be assigned to one group. Those two computing units are then removed from the pool. The same method can be performed to assign the remaining computing units in the pool to groups.

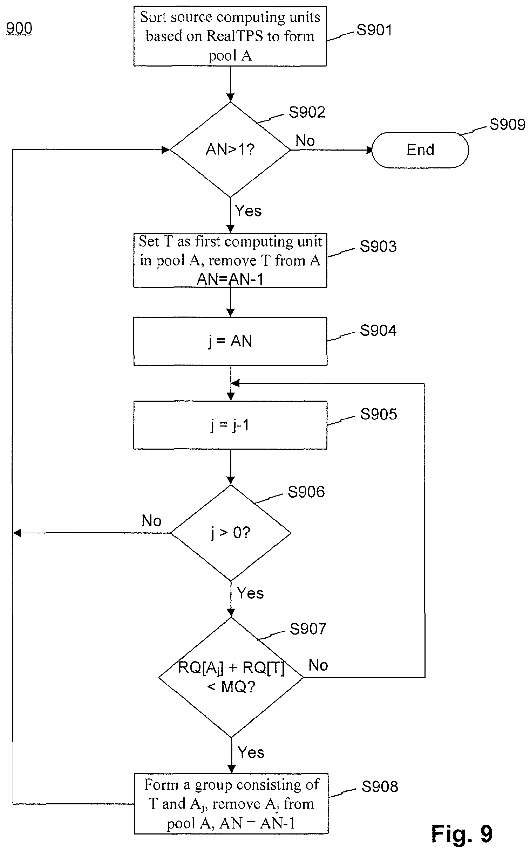

The method for grouping original computing units described above can ensure that the merged computing tasks do not exceed the processing capacity of the responsible computing units, to avoid overloading the responsible computing units. Further, because the grouping method is performed on the basis of selecting the smallest RealTPS in the pool and adding it to a large RealTPS in the pool (beginning from the largest), it can avoid forming a group in which the merged computing task is very small for the responsible computing unit to process. This can avoid a waste of computing resources and maximize the release of computing resources. Because these two aspects are taken into consideration, the system executing the algorithm of this disclosure can successfully perform the grouping process and avoid relying entirely on manual operation to perform mergers, which leads to uneven workloads and the need for repeated adjustments. Figure 9 is a flowchart of an exemplary method 900 that provides explanations for the basic steps of a merger algorithm performed by a real-time stream system.

In the description below, MQ is the theoretical number of messages processed by a computing unit per second.

In step S901, the system sorts the computing units having a workload lighter than pre-determined conditions based on their RealTPS in an order from small to large, to obtain a computing-unit pool A. A total number of computing units in the pool is AN. $A_0$, $A_1$, ..., $A_{AN-1}$ represent the computing units in pool A. RQ[i] represents the RealTPS of the ith computing unit. As this algorithm is executed, computing units will be removed from pool A once they are assigned to a group. Also, the value of AN will change, and the index of the remaining computing units is adjusted accordingly.

In step S902, the system determines whether AN > 1 is satisfied. If it is determined that the condition is satisfied (Yes), it indicates that there are at least two computing units in pool A. The method 900 then advances to step S903; otherwise (No), the method ends at step S909.

In step S903, the system sets T as the first computing unit ($A_0$) in pool A, and removes T from pool A. The system performs AN = AN-1, i.e., the number of remaining computing units becomes AN-1.

In step S904, the system establishes that j = AN, which is the number of computing units now in pool A.

In step S905, the system establishes j = j-1. If this step is performed following step S904, j represents the index value of the last computing unit currently in pool A. If this step is performed following step S907, which will be discussed below, j represents the index value of the computing unit before the last computing unit Aj in pool A.

In step S906, the system determines whether j > 0. If it is determined that the condition is satisfied (Yes), the method advances to step S907. Otherwise (No), it means that there is no computing unit remaining in pool A, the method returns to step S902 and continues to seek a computing unit having a computing task that can be merged with other computing tasks.

In step S907, the system determines whether $RQ[A_j] + RQ[T] < MQ$. If it is determined that the condition is satisfied (Yes), it means that a computing unit can be grouped with T, and the method 900 advances to step S908. Otherwise (No), the method returns to step S905.

In step S908, the system forms a group consisting of T and $A_j$ and removes $A_j$ from pool A. The system performs AN = AN-1, and returns to step S902.

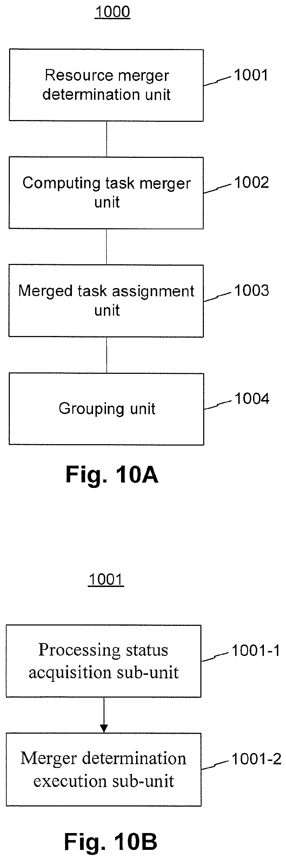

The embodiment described above provides a method for releasing computing resources in real-time stream computing. This disclosure also provides a device for releasing computer resources in real-time stream computing. An exemplary device is shown in Figure 10A.

Referring to Figure 10A, a device 1000 for releasing computing resources in real-time stream computing includes a resource merger determination unit 1001, configured to determine whether there are computing units having computing tasks that need to be merged; a computing task merger unit 1002, configured to merge computing tasks transmitted through the distributed message queue and to be processed by the computing units; and a merged task assignment unit 1003, configured to assign the merged computing task to a computing unit (responsible computing unit) responsible for processing the merged computing task output by the computing task merger unit 1002. A computing task refers to a message split cluster having one or more message splits. Each of the message splits contains one or more messages.

In some embodiments, device 1000 further includes a grouping unit 1004 configured to group the original computing units.

Correspondingly, the computing task merger unit 1002 can merge the computing tasks of the computing units in each group.

In other embodiments, the resource merger determination unit 1001 includes a processing status acquisition sub-unit 1001-1 and a merger determination execution sub-unit 1001-2, as shown in Figure 10B.

The processing status acquisition sub-unit 1001-1 is configured to acquire the processing status of the computing units in processing message split clusters. The processing status can include a message processing progress of the computing unit and a number of messages processed per second by the computing unit. The message processing progress is a difference between the time the message was processed by the computing unit and a time the message was generated.

The merger determination execution sub-unit 1001-2 is configured to determine, based on the processing status of the computing units acquired by the processing status acquisition sub-unit 1001-1, whether the following two conditions are satisfied.

1. More than one computing unit has message processing progress P less than or equal to a pre-determined progress threshold value.

2. A total number of computing units in work is greater than a pre-determined minimum number of computing units

In some embodiments, the grouping unit 1004 is configured to form a plurality of groups, each of which contains two original computing units. The grouping unit 1004 may group the computing units based on the following conditions.

Based on the processing status data of the computing units acquired by the processing status acquisition sub-unit 1001-1, a sum of numbers of messages processed per second by the two computing units in each group is less than the theoretical number of messages processed by a computing unit per second.

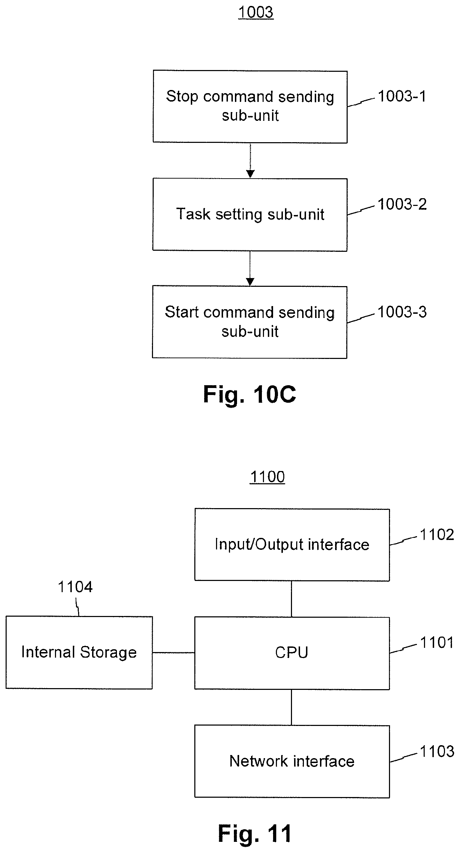

In some embodiments, the merger task assignment unit 1003 may include a stop command sending sub-unit 1003-1, a task setting sub-unit 1003-2, and a start command sending sub-unit 1003-3, as shown in Figure 10C.

The stop command sending sub-unit 1003-1 is configured to send a stop command to the computing units of a group, instructing them to stop processing message split clusters.

The task setting sub-unit 1003-2 is configured to prepare a merged message split cluster (merged computing task) for the computing unit responsible for processing the merged message split cluster.

The start command sending sub-unit 1003-3 is configured to send a start command to the computing unit responsible for processing the merged computing task, instructing the responsible computing unit to begin processing the merged computing task.

With reference to Figure 11, the embodiments described above may be performed by a computer 1100 including one or more processors (CPU) 1101, input/output interface 1102, networking interface 1103, and internal storage 1104. For example, the real-time stream computing system 100 can be implemented by a computer or a series of computers. The computer can be a PC, a laptop, a server, a mobile device, or other devices that include processors.

Internal storage 1104 may store instructions executable by CPU 1101 to perform the above embodiments. Internal storage 1104 may include volatile computer-readable storage media, random access memory (RAM), and/or nonvolatile memory, such as read-only memory (ROM) or flash RAM. Internal storage 1104 is an example of a computer-readable media.

Computer-readable media include, for example, non-transitory, volatile and non-volatile, portable and non-portable media, which can store information by any method or technology. Information can be computer-readable instructions, data structure, program module, or other data. Computer storage media may include, but are not limited to, phase change random access memory (PRAM), static random access memory (SRAM), dynamic random access memory (DRAM), other types of random-access memory (RAM), read-only memory (ROM), electrically erasable programmable read-only memory (EEPROM), flash memory or other memory technology, compact disk read-only memory (CD-ROM), digital versatile disc (DVD), or other optical storage, magnetic cassettes, magnetic tape, magnetic disk storage or other magnetic storage devices, or any other non-transmitting medium. These computer-readable storage media can store information accessible to the computer.

One of ordinary skill in the art will understand that the above described embodiments can be implemented by hardware, or software (program codes), or a combination of hardware and software. If implemented by software, it may be stored in the above-described computer-readable media. The software, when executed by the processor can perform the disclosed methods. The computing units and the other functional units described in this disclosure can be implemented by hardware, or software, or a combination of hardware and software.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

**Claims**

1. A method for augmenting the capacity of computing resources in a real-time stream computing system (100), in which computing tasks are transmitted by a distributed message queue (102), the method being performed by a processor (1101) of the system, the method comprising:

   acquiring a processing status of a first computing unit (104) of the system (100) in processing a first message split cluster (402) included in a computing task and transmitted by the distributed message queue (102) for processing by the first computing unit (104), wherein:

   the first message split cluster (402) contains a plurality of message splits, each of the message splits containing one or more messages, and
the processing status includes a message processing progress of the first computing unit (104) and a number of messages processed by the first computing unit per second, the message processing progress being a difference between a first time at which a message is processed by the first computing unit (104) and a time at which the message is generated;

upon determining (S202), based on the acquired processing status, that the first computing unit (104) has a workload exceeding pre-determined conditions,
ranking (S502) each message split comprised in the first message split cluster (402) according to the number of messages contained in the message split and splitting (S203) the first message split cluster (402) into a number of message split clusters (404, 406) by allocating the message splits from the first message split cluster (402) into the message split clusters (404, 406) based on the ranking of the message splits in the first message split cluster (402); and assigning (S204) the message split clusters (404, 406) obtained by splitting the first message split cluster (402) to a number of second computing units (104) for processing, the number of second computing units corresponding to the number of the message split clusters (404, 406).

2. The method of claim 1, wherein the workload of the first computing exceeds the pre-determined conditions when:

the message processing progress of the first computing unit(104) is greater than a pre-determined progress threshold, and
the number of messages processed by the first computing unit (104) per second is greater than or equal to a theoretical number of messages processed by the first computing unit per second; and
wherein the splitting of the first message split cluster is performed when a total number of computing units (104) in work in the system is less than a pre-determined maximum number of computing units.

3. The method of claim 1,
wherein the splitting of the first message split cluster (402) includes splitting the first message split cluster into two second message split clusters (404, 406); and
wherein the assigning of message split clusters includes assigning the two second message split clusters (404, 406) to two second computing units (104), respectively, for processing.

4. The method of claim 3, wherein splitting the first message split cluster (402) into two second message split clusters (404, 406) comprises:

allocating (S505), a set of lowest-ranked message splits from the first message split cluster (402)to a first (404) of the second message split clusters, wherein the set of lowest-ranked message splits includes a number of messages is more than half of the total messages in the first message split cluster, and
allocating remaining message splits from the first message split cluster (402) to the second (406) of the second message split clusters.

5. The method of claim 3 or 4, wherein the first message split cluster (402) is split to form the two second message split clusters (404, 406) so that the two second message split clusters each contain substantially equal number of messages.

6. The method of claim 5, wherein the assigning the two second message split clusters (404, 406) to two second computing units (104)comprises:

sending a stop command to the first computing unit, instructing the first computing unit (104) to stop processing the first message split cluster (402);
preparing the two second message split clusters for the two second computing units (104); and
sending start commands to the two second computing units (104) to begin processing the two second message split clusters (404, 406).

7. A device for augmenting the capacity of computing resources in real-time stream computing, comprising:

a processing status acquisition sub-unit (601-1) configured to acquire a processing status of a first computing unit (104) in processing a first message split cluster (402) included in a computing task and transmitted through a distributed message queue (102) for processing by the first computing unit (104), wherein

the first message split cluster (402) contains a plurality of message splits, each of the message splits containing one or more messages, and

the processing status includes a message processing progress of the first computing unit (104) and a number of messages processed by the first computing unit per second, the message processing progress being a difference between a first time at which a message is processed by the first computing unit (104) and a time at which the message is generated;

a workload determination sub-unit (601-2) configured to determine, based on the acquired processing status, whether the first computing unit (104) has a workload that exceeds pre-determined conditions; and a computing task split unit (602) configured to:

rank each message split comprised in the first message split cluster (402) according to the number of messages contained in the message split, and

split the first message split cluster (402) into a number of message split clusters (404, 406) by allocating the message splits from the first message split cluster (402) into the message split clusters (404, 406) based on the ranking of the message splits in the first message split cluster (402); and

a task assignment unit (603) configured to assign the message split clusters (404, 406) obtained by splitting the first message split cluster (402) using the computing task split unit (602) to a number of second computing units (104) for processing, the number of second computing units (104) corresponding to the number of message split clusters.

8. The device of claim 7, wherein the workload determination sub-unit (601-2) is configured to determine for the first computing unit (104) the conditions of:

the message processing progress of the first computing unit (104) being greater than a pre-determined progress threshold;

the number of messages processed by the first computing unit (104) per second being greater than or equal to a theoretical number of messages processed by the first computing unit per second; and wherein the splitting of the first message split cluster(402) is performed by the computing task split unit (602) when

a total number of computing units (104) in work is being less than a maximum number of pre-determined computing units.

9. The device of claim 7 or 8,
wherein the computing task split unit (602) is configured to split the first message split cluster (402) into two second message split clusters (404, 406); and
wherein the task assignment unit (603) is configured to assign the two second message split clusters (404, 406) to two second computing units (104), respectively, for processing.

10. The device of claim 9, wherein the computing task split unit (602) is configured to split the first message split cluster (402) into two second message split clusters (404, 406) by:

allocating, a set of lowest-ranked message splits from the first message split cluster (402) to a first (404) of the second message split clusters, wherein the set of lowest-ranked message splits includes a number of messages is more than half of total messages in the first message split cluster (402), and

allocating remaining message splits from the first message split cluster (402) to the second (406) of the second message split clusters.

11. The device of claim 9 or 10, wherein the computing task split unit (602) is configured to split the first message split cluster (402) so that the two second message split clusters (404, 406) each contain substantially equal number of messages.

12. The device of claim 11, wherein the task assignment unit (603) comprises:

a stop command sending sub-unit (603-1) configured to send a stop command to the first computing unit (104), instructing the first computing unit to stop processing the first message split cluster (402);
a task setting sub-unit (603-1) configured to prepare the two second message split clusters (404, 406) for the two second computing units (104); and

a start command sending sub-unit (603-3) configured to send start commands to the two second computing units (104) to begin processing the two second message split clusters (404, 406).

13. A computer-readable storage medium storing instructions which, when executed by a processor, cause the processor (1101) to perform the method of any one of claims 1 to 6.

**Patentansprüche**

1. Verfahren zur Erweiterung der Kapazität von Rechenressourcen in einem Echtzeit-Stream-Computing-System (100), in dem Rechenaufgaben durch eine verteilte Nachrichten-Warteschlage (102) übermittelt werden, wobei das Verfahren durch einen Prozessor (1101) des Systems ausgeführt wird, wobei das Verfahren folgendes umfasst:

Erfassen eines Verarbeitungsstatus einer ersten Recheneinheit (104) des Systems (100) in der Verarbeitung eines ersten Nachrichten-Split-Clusters (402), das in einer Rechenaufgabe enthalten ist und durch die verteilte Nachrichten-Warteschlage (102) zur Verarbeitung durch die erste Recheneinheit (104) übermittelt wird, wobei:

das erste Nachrichten-Split-Cluster (402) eine Mehrzahl von Nachrichten-Splits enthält, wobei jedes der Nachrichten-Splits eine oder mehrere Nachrichten enthält; und wobei
der Verarbeitungsstatus einen Nachrichtenverarbeitungsfortschritt der ersten Recheneinheit (104) aufweist und eine Anzahl an Nachrichten, die durch die erste Recheneinheit pro Sekunde verarbeitet werden, wobei der Nachrichtenverarbeitungsfortschritt eine Differenz zwischen einer ersten Zeit ist, zu der eine Nachricht von der ersten Recheneinheit (104) verarbeitet wird, und einer zweiten Zeit, zu der die Nachricht erzeugt wird;

nach dem Bestimmen (S202) auf der Basis des erfassten Verarbeitungsstatus, dass die erste Recheneinheit (104) eine Workload aufweist, welche vorbestimmte Bedingungen überschreitet,

Klassifizieren (S502) jedes Nachrichten-Splits in dem ersten Nachrichten-Split-Cluster (402) gemäß der in dem Nachrichten-Split enthaltenen Anzahl an Nachrichten; und
Aufteilen (S203) des ersten Nachrichten-Split-Clusters (402) in eine Reihe von Nachrichten-Split-Clustern (404, 406) durch Zuordnen der Nachrichten-Splits aus dem ersten Nachrichten-Split-Cluster (402) in die Nachrichten-Split-Cluster (404, 406) auf der Basis der Klassifizierung der Nachrichten-Splits in dem ersten Nachrichten-Split-Cluster (402); und
Zuweisen (S204) der durch Aufteilen des ersten Nachrichten-Split-Clusters (402) erhaltenen Nachrichten-Split-Cluster (404, 406) zu einer Reihe von zweiten Recheneinheiten (104) zur Verarbeitung, wobei die Anzahl der zweiten Recheneinheiten der Anzahl der Nachrichten-Split-Cluster (404, 406) entspricht.

2. Verfahren nach Anspruch 1, wobei die Workload der ersten Recheneinheit die vorbestimmten Bedingungen überschreitet, wenn:

der Nachrichtenverarbeitungsfortschritt der ersten Recheneinheit (104) größer ist als ein vorbestimmter Fortschrittsschwellenwert; und wenn
die Anzahl der durch die erste Recheneinheit (104) pro Sekunde verarbeiteten Nachrichten größer oder gleich einer theoretischen Anzahl von Nachrichten ist, die durch die erste Recheneinheit pro Sekunde verarbeitet werden; und
wobei das Aufteilen des ersten Nachrichten-Split-Clusters ausgeführt wird, wenn eine Gesamtanzahl aktiver Recheneinheiten (104) in dem System kleiner ist als eine vorbestimmte maximale Anzahl an Recheneinheiten.

3. Verfahren nach Anspruch 1,
wobei das Aufteilen des ersten Nachrichten-Split-Clusters (402) das Aufteilen des ersten Nachrichten-Split-Clusters in zwei zweite Nachrichten-Split-Cluster (404, 406) umfasst; und
wobei das Zuweisen von Nachrichten-Split-Clustern das entsprechende Zuweisen der zwei zweiten Nachrichten-Split-Cluster (404, 406) zu zwei zweiten Recheneinheiten (104) zur Verarbeitung umfasst.

4. Verfahren nach Anspruch 3, wobei das Aufteilen des ersten Nachrichten-Split-Clusters (402) in zwei zweite Nachrichten-Split-Cluster (404, 406) folgendes umfasst:

Zuordnen (S505) einer Gruppe der am niedrigsten klassifizierten Nachrichten-Splits des ersten Nachrichten-Split-Clusters (402) zu einem ersten (404) der zweiten Nachrichten-Split-Cluster, wobei die Gruppe der am niedrigsten klassifizierten Nachrichten-Splits eine Anzahl von Nachrichten aufweist, die größer ist als die Hälfte der Nachrichten insgesamt in dem ersten Nachrichten-Split-Cluster; und

Zuordnen der verbleibenden Nachrichten-Splits aus dem ersten Nachrichten-Split-Cluster (402) zu dem zweiten (406) der zweiten Nachrichten-Split-Cluster.

5. Verfahren nach Anspruch 3 oder 4, wobei das erste Nachrichten-Split-Cluster (402) aufgeteilt wird, um die zwei zweiten Nachrichten-Split-Cluster (404, 406) zu bilden, so dass die zwei zweiten Nachrichten-Split-Cluster jeweils im Wesentlichen die gleiche Anzahl an Nachrichten enthalten.

6. Verfahren nach Anspruch 5, wobei das Zuweisen der zwei zweiten Nachrichten-Split-Cluster (404, 406) zu den zwei zweiten Recheneinheiten (104) folgendes umfasst:

Senden eines Stopp-Befehls an die erste Recheneinheit, der die erste Recheneinheit (104) anweist, die Verarbeitung des ersten Nachrichten-Split-Clusters (402) zu unterbrechen;

Vorbereiten der zwei zweiten Nachrichten-Split-Cluster für die zwei zweiten Recheneinheiten (104); und

Senden von Start-Befehlen an die zwei zweiten Recheneinheiten (104), um die Verarbeitung der zwei zweiten Nachrichten-Split-Cluster (404, 406) zu starten.

7. Vorrichtung zur Erweiterung der Kapazität von Rechenressourcen im Echtzeit-Stream-Computing, umfassend:

eine Verarbeitungsstatuserfassungs-Untereinheit (601-1), die so gestaltet ist, dass sie eine Verarbeitungsstatus einer ersten Recheneinheit (104) in der Verarbeitung eines ersten Nachrichten-Split-Clusters (402) erfasst, das in einer Rechenaufgabe enthalten ist und durch eine verteilte Nachrichten-Warteschlage (102) zur Verarbeitung durch die erste Recheneinheit (104) übermittelt wird, wobei:

das erste Nachrichten-Split-Cluster (402) eine Mehrzahl von Nachrichten-Splits enthält, wobei jedes der Nachrichten-Splits eine oder mehrere Nachrichten enthält; und wobei

der Verarbeitungsstatus einen Nachrichtenverarbeitungsfortschritt der ersten Recheneinheit (104) aufweist und eine Anzahl an Nachrichten, die durch die erste Recheneinheit pro Sekunde verarbeitet werden, wobei der Nachrichtenverarbeitungsfortschritt eine Differenz zwischen einer ersten Zeit ist, zu der eine Nachricht von der ersten Recheneinheit (104) verarbeitet wird, und einer zweiten Zeit, zu der die Nachricht erzeugt wird;

eine Workload-Bestimmungs-Untereinheit (601-2), die so gestaltet ist, dass sie auf der Basis des erfassten Verarbeitungsstatus bestimmt, ob die erste Recheneinheit (104) eine Workload aufweist, welche vorbestimmte Bedingungen überschreitet; und

eine Rechenaufgaben-Split-Einheit (602), die für folgende Zwecke gestaltet ist:

Klassifizieren jedes Nachrichten-Splits in dem ersten Nachrichten-Split-Cluster (402) gemäß der in dem Nachrichten-Split enthaltenen Anzahl an Nachrichten; und

Aufteilen des ersten Nachrichten-Split-Clusters (402) in eine Reihe von Nachrichten-Split-Clustern (404, 406) durch Zuordnen der Nachrichten-Splits aus dem ersten Nachrichten-Split-Cluster (402) in die Nachrichten-Split-Cluster (404, 406) auf der Basis der Klassifizierung der Nachrichten-Splits in dem ersten Nachrichten-Split-Cluster (402); und

eine Aufgabenzuweisungseinheit (603), die so gestaltet ist, dass sie die durch Aufteilen des ersten Nachrichten-Split-Clusters (402) erhaltenen Nachrichten-Split-Cluster (404, 406) unter Verwendung der Rechenaufgaben-Split-Einheit (602) einer Reihe von zweiten Recheneinheiten (104) zur Verarbeitung zuweist, wobei die Anzahl der zweiten Recheneinheiten (104) der Anzahl der Nachrichten-Split-Cluster entspricht.

8. Vorrichtung nach Anspruch 7, Workload-Bestimmungs-Untereinheit (601-2) so gestaltet ist, dass sie für die erste Recheneinheit (104) die folgenden Bedingungen bestimmt:

der Nachrichtenverarbeitungsfortschritt der ersten Recheneinheit (104) ist größer als ein vorbestimmter Fortschrittsschwellenwert;

die Anzahl der durch die erste Recheneinheit (104) pro Sekunde verarbeiteten Nachrichten ist größer oder gleich einer theoretischen Anzahl von Nachrichten, die durch die erste Recheneinheit pro Sekunde verarbeitet werden; und wobei das Aufteilen des ersten Nachrichten-Split-Clusters (402) durch die Rechenaufgaben-Split-Einheit (602) ausgeführt wird, wenn eine Gesamtanzahl aktiver Recheneinheiten (104) kleiner ist als eine vorbestimmte maximale Anzahl an Recheneinheiten.

9. Vorrichtung nach Anspruch 7 oder 8,
wobei die Rechenaufgaben-Split-Einheit (602) so gestaltet ist, dass sie das erste Nachrichten-Split-Cluster (402) in zwei zweite Nachrichten-Split-Cluster (404, 406) aufteilt; und
wobei die Aufgabenzuweisungseinheit (603) so gestaltet ist, dass sie die zwei zweiten Nachrichten-Split-Cluster (404, 406) entsprechend zur Verarbeitung zwei zweiten Recheneinheiten (104) zuweist.

10. Vorrichtung nach Anspruch 9, wobei die Rechenaufgaben-Split-Einheit (602) so gestaltet ist, dass sie das erste Nachrichten-Split-Cluster (402) in zwei zweite Nachrichten-Split-Cluster (404, 406) aufteilt, durch:

Zuordnen einer Gruppe der am niedrigsten klassifizierten Nachrichten-Splits des ersten Nachrichten-Split-Clusters (402) zu einem ersten (404) der zweiten Nachrichten-Split-Cluster, wobei die Gruppe der am niedrigsten klassifizierten Nachrichten-Splits eine Anzahl von Nachrichten aufweist, die größer ist als die Hälfte der Nachrichten insgesamt in dem ersten Nachrichten-Split-Cluster (402); und
Zuordnen der verbleibenden Nachrichten-Splits aus dem ersten Nachrichten-Split-Cluster (402) zu dem zweiten (406) der zweiten Nachrichten-Split-Cluster.

11. Vorrichtung nach Anspruch 9 oder 10, wobei die Rechenaufgaben-Split-Einheit (602) so gestaltet ist, dass sie das erste Nachrichten-Split-Cluster (402) so aufteilt, dass die zwei zweiten Nachrichten-Split-Cluster (404, 406) jeweils im Wesentlichen die gleiche Anzahl an Nachrichten enthalten.

12. Vorrichtung nach Anspruch 11, wobei die Aufgabenzuweisungseinheit (603) folgendes umfasst:

eine Stopp-Befehl-Sende-Untereinheit (603-1), die so gestaltet ist, dass sie einen Stopp-Befehl an die erste Recheneinheit (104) sendet, der die erste Recheneinheit anweist, die Verarbeitung des ersten Nachrichten-Split-Clusters (402) zu unterbrechen;
eine Aufgabenfestlegungs-Untereinheit (603-1), die so gestaltet ist, dass sie die zwei zweiten Nachrichten-Split-Cluster (404, 406) für die zwei zweiten Recheneinheiten (104) vorbereitet; und
eine Start-Befehl-Sende-Untereinheit (603-3), die so gestaltet ist, dass sie Start-Befehle an die zwei zweiten Recheneinheiten (104) sendet, um die Verarbeitung der zwei zweiten Nachrichten-Split-Cluster (404, 406) zu starten.

13. Computerlesbares Speichermedium, das Anweisungen speichert, die, wenn sie durch einen Prozessor ausgeführt werden, bewirken, dass der Prozessor (1101) das Verfahren nach einem der Ansprüche 1 bis 6 ausführt.

**Revendications**

1. Procédé pour augmenter la capacité de ressources informatiques dans un système informatique à flux en temps réel (100), des tâches de calcul étant transmises par une file d'attente de messages distribués (102), le procédé étant exécuté par un processeur (1101) du système, le procédé comprenant les étapes consistant à :

acquérir un état de traitement d'une première unité de calcul (104) du système (100) lors du traitement d'un premier groupe de fractionnement de messages (402) inclus dans une tâche de calcul et transmis par la file d'attente de messages distribués (102) pour traitement par la première unité de calcul (104),

le premier groupe de fractionnement de messages (402) contenant une pluralité de fractionnements de message, chacun des fractionnements de message contenant un ou plusieurs messages, et
l'état de traitement comprenant une progression de traitement de message de la première unité de calcul (104) et un nombre de messages traités par la première unité de calcul par seconde, la progression de traitement de message étant une différence entre un premier moment auquel un message est traité par la première unité de calcul (104) et un moment auquel le message est généré ;

lorsqu'il est déterminé (S202), en fonction de l'état de traitement acquis, que la première unité de calcul (104) a une charge de travail dépassant des conditions prédéfinies,

classer (S502) chaque fractionnement de messages compris dans le premier groupe de fractionnement de messages (402) en fonction du nombre de messages contenus dans le fractionnement de messages et fractionner (S203) le premier groupe de fractionnement de messages (402) en un certain nombre de groupes de fractionnement de messages (404, 406) en affectant les fractionnements de messages du premier groupe de fractionnement de messages (402) aux groupes de fractionnement de messages (404, 406) en fonction du classement des fractionnements de messages dans le premier groupe de fractionnement de messages (402) ; et
affecter (S204) les groupes de fractionnement de messages (404, 406) obtenus par fractionnement du premier groupe de fractionnement de messages (402) à un certain nombre de secondes unités de calcul (104) pour traitement, le nombre de secondes unités de calcul correspondant au nombre des groupes de fractionnement de messages (404, 406).

2. Procédé selon la revendication 1, la charge de travail du premier calcul dépassant les conditions prédéfinies lorsque :

la progression de traitement des messages de la première unité de calcul (104) est supérieure à un seuil de progression prédéfini, et
le nombre de messages traités par la première unité de calcul (104) par seconde est supérieur ou égal à un nombre théorique de messages traités par la première unité de calcul par seconde ; et
le fractionnement du premier groupe de fractionnement de messages étant effectué lorsqu'un nombre total d'unités de calcul (104) en fonctionnement dans le système est inférieur à un nombre maximal prédéfini d'unités de calcul.

3. Procédé selon la revendication 1,
le fractionnement du premier groupe de fractionnement de messages (402) comprenant l'étape consistant à fractionner le premier groupe de fractionnement de messages en deux seconds groupes de fractionnement de messages (404, 406) ; et
l'affectation de groupes de fractionnement de messages comprenant l'étape consistant à affecter les deux seconds groupes de fractionnement de messages (404, 406) à deux secondes unités de calcul (104), respectivement, pour traitement.

4. Procédé selon la revendication 3, le fractionnement du premier groupe de fractionnement de messages (402) en deux seconds groupes de fractionnement de messages (404, 406), comprenant les étapes consistant à :

affecter (S505) un ensemble de fractionnements de messages les moins bien classés provenant du premier groupe de fractionnement de messages (402) à un premier (404) des seconds groupes de fractionnement de messages, l'ensemble de fractionnements de messages les moins bien classés comprenant un nombre de messages représentant plus de la moitié des messages totaux dans le premier groupe de fractionnement de messages, et
affecter les fractionnements de messages restants du premier groupe de fractionnement de messages (402) au second (406) des seconds groupes de fractionnement de messages.

5. Procédé selon la revendication 3 ou 4, le premier groupe de fractionnement de messages (402) étant fractionné pour former les deux seconds groupes de fractionnement de messages (404, 406) de sorte que les deux seconds groupes de fractionnement de messages contiennent chacun sensiblement le même nombre de messages.

6. Procédé selon la revendication 5, l'affectation des deux seconds groupes de messages fractionnés (404, 406) à deux secondes unités de calcul (104) comprenant les étapes consistant à :

envoyer une commande d'arrêt à la première unité de calcul, demandant à la première unité de calcul (104) d'arrêter le traitement du premier groupe de fractionnement de messages (402) ;
préparer les deux seconds groupes de messages fractionnés pour les deux secondes unités de calcul (104) ; et
envoyer des commandes de démarrage aux deux secondes unités de calcul (104) pour commencer le traitement des deux seconds groupes de messages (404, 406).

7. Dispositif pour augmenter la capacité de ressources informatiques dans un système informatique à flux en temps réel, comprenant :

une sous-unité d'acquisition d'état de traitement (601-1) conçue pour acquérir un état de traitement d'une première unité de calcul (104) dans le traitement d'un premier groupe de fractionnement de messages (402) inclus dans une tâche de calcul et transmis par l'intermédiaire d'une file d'attente de messages distribués (102) pour traitement par la première unité de calcul (104),

le premier groupe de fractionnement de messages (402) contenant une pluralité de fractionnements de message, chacun des fractionnements de message contenant un ou plusieurs messages, et
l'état de traitement comprenant une progression de traitement de message de la première unité de calcul (104) et un nombre de messages traités par la première unité de calcul par seconde, la progression de traitement de message étant une différence entre un premier moment auquel un message est traité par la première unité de calcul (104) et un moment auquel le message est généré ;

une sous-unité de détermination de charge de travail (601-2) conçue pour déterminer, en fonction de l'état de traitement acquis, si la première unité de calcul (104) a une charge de travail qui dépasse des conditions prédéfinies ; et
une unité de fractionnement de tâches de calcul (602) conçue pour :

classer chaque fractionnement de messages compris dans le premier groupe de fractionnement de messages (402) en fonction du nombre de messages contenus dans le fractionnement de messages et
fractionner le premier groupe de fractionnement de messages (402) en un certain nombre de groupes de fractionnement de messages (404, 406) en affectant les fractionnements de messages du premier groupe de fractionnement de messages (402) aux groupes de fractionnement de messages (404, 406) en fonction du classement des fractionnements de messages dans le premier groupe de fractionnement de messages (402) ; et

une unité d'affectation de tâche (603) conçue pour affecter les groupes de fractionnement de messages (404, 406) obtenus en fractionnant le premier groupe de fractionnement de messages (402) à l'aide de l'unité de fractionnement de tâche de calcul (602) à un certain nombre de secondes unités de calcul (104) pour traitement, le nombre de secondes unités de calcul (104) correspondant au nombre de groupes de fractionnement de messages.

8. Dispositif selon la revendication 7, la sous-unité de détermination de charge de travail (601-2) étant conçue pour déterminer pour la première unité de calcul (104) les conditions dans lesquelles :

la progression de traitement de message de la première unité de calcul (104) est supérieure à un seuil de progression prédéfini ;
le nombre de messages traités par la première unité de calcul (104) par seconde est supérieur ou égal à un nombre théorique de messages traités par la première unité de calcul par seconde ; et le fractionnement du premier groupe de fractionnement de messages (402) étant effectué par l'unité de fractionnement de tâches (602) quand un nombre total d'unités de calcul (104) en fonctionnement est inférieur à un nombre maximal d'unités de calcul prédéfinies.

9. Dispositif selon la revendication 7 ou 8,
l'unité de fractionnement de tâches de calcul (602) étant conçue pour fractionner le premier groupe de fractionnement de messages (402) en deux seconds groupes de fractionnement de messages (404, 406) ; et
l'unité d'affectation de tâche (603) étant conçue pour affecter les deux seconds groupes de fractionnement de messages (404, 406) à deux secondes unités de calcul (104), respectivement, pour traitement.

10. Dispositif selon la revendication 9, l'unité de fractionnement de tâches de calcul (602) étant conçue pour diviser le premier groupe de fractionnement de messages (402) en deux seconds groupes de fractionnement de messages (404, 406) par les étapes consistant à :

affecter un ensemble de fractionnements de messages les moins bien classés provenant du premier groupe de fractionnement de messages (402) à un premier (404) des seconds groupes de fractionnement de messages, l'ensemble de fractionnements de messages les moins bien classés comprenant un nombre de messages représentant plus de la moitié des messages totaux dans le premier groupe de fractionnement de messages (402), et
affecter les fractionnements de messages restants du premier groupe de fractionnement de messages (402) au second (406) des seconds groupes de fractionnement de messages.

**11.** Dispositif selon la revendication 9 ou 10, l'unité de fractionnement de tâches de calcul (602) étant conçue pour fractionner le premier groupe de fractionnement de messages (402) de sorte que les deux seconds groupes de fractionnement de messages (404, 406) contiennent chacun sensiblement le même nombre de messages.

**12.** Dispositif selon la revendication 11, l'unité d'affectation de tâche (603) comprenant :

une sous-unité d'envoi de commande d'arrêt (603-1) conçue pour envoyer une commande d'arrêt à la première unité de calcul (104), demandant à la première unité de calcul d'arrêter le traitement du premier groupe de fractionnement de messages (402) ;
une sous-unité de définition de tâches (603-1) conçue pour préparer les deux seconds groupes de fractionnement de messages (404, 406) pour les deux secondes unités de calcul (104) ; et
une sous-unité d'envoi de commande de démarrage (603-3) conçue pour envoyer des commandes de démarrage aux deux secondes unités de calcul (104) pour commencer à traiter les deux seconds groupes de fractionnement de messages (404, 406).

**13.** Support lisible par ordinateur stockant des informations qui, lorsqu'elles sont exécutées par un processeur, amènent le processeur (1101) à effectuer le procédé selon l'une quelconque des revendications 1 à 6.

EP 3 129 880 B1

High data flow

Low data flow

102

102

104

104

104

104

**Fig. 1**

200

```
        ┌──────────────────────────┐
   ┌───►│ Acquire processing status│──S201
   │    └──────────────────────────┘
   │                │
   │                ▼
   │            ╱──────────╲
   │          ╱   Workload   ╲──S202
No │         ◄    exceeds      
   │          ╲ predetermined╱
   │            ╲ condition? ╱
   │              ╲────────╱
   │                │
   │               Yes
   │                ▼
   │    ┌──────────────────────────┐
   │    │   Split computing tasks  │──S203
   │    └──────────────────────────┘
   │                │
                    ▼
        ┌──────────────────────────┐
        │   Assign message split   │
        │  clusters to responsible │──S204
        │     computing units      │
        └──────────────────────────┘
```

**Fig. 2**

**Fig. 3**

EP 3 129 880 B1

**Fig. 4**

500

Calculate total number QS of messages contained in source message split cluster — S501

↓

Sort and rank message splits in source message split cluster — S502

↓

Perform initialization, set i = 0, QA = 0 — S503

↓

S504

Qsi + QA < QS/2

No → End — S507

Yes ↓

Add message split Si to first message split cluster A and update QA — S505

↓

i = i +1 — S506

## Fig. 5

600

```
┌─────────────────────────┐
│  Workload determination │ ──601
│          unit           │
└─────────────────────────┘
             │
             ▼
┌─────────────────────────┐
│  Computing task split unit │ ──602
│                         │
└─────────────────────────┘
             │
             ▼
┌─────────────────────────┐
│                         │ ──603
│   Task assignment unit  │
└─────────────────────────┘
```

# Fig. 6A

601

```
┌─────────────────────────┐
│   Processing status     │ ──601-1
│    acquiring sub-unit   │
└─────────────────────────┘
             │
             ▼
┌─────────────────────────┐
│  Workload determination │ ──601-2
│         sub-unit        │
└─────────────────────────┘
```

# Fig. 6B

603

```
┌─────────────────────────┐
│  Stop command sending   │ ⟍ 603-1
│        sub-unit         │
└─────────────────────────┘
             │
             ▼
┌─────────────────────────┐
│   Task setting sub-unit │ ⟍ 603-2
│                         │
└─────────────────────────┘
             │
             ▼
┌─────────────────────────┐
│  Start command sending  │ ⟍ 603-3
│        sub-unit         │
└─────────────────────────┘
```

# Fig. 6C

**Fig. 7**

800

Acquire processing
status of each
computing unit — S801

Determine whether
conditions A and B are
satisfied? — S802

No

Yes

Merge computing tasks — S803

Assign one computing
unit to process the
merged computing task — S804

**Fig. 8A**

<u>803</u>

Group computing units
whose tasks need to be
merged
———S803-1

↓

Merge computing tasks
———S803-2

# Fig. 8B

<u>804</u>

Sends stop commands to
source computing units of
one group
———804-1

↓

Prepare a merged
computing task
———804-2

↓

Send start command to
responsible computing
unit
———804-3

# Fig. 8C

900

```
Sort source computing units
based on RealTPS to form          S901
pool A
```

S902

AN>1?  —— No ——→  End  S909

Yes

```
Set T as first computing unit
in pool A, remove T from A      S903
AN=AN-1
```

j = AN  S904

j = j-1  S905

S906

No ←—— j > 0?

Yes

S907

RQ[A_j] + RQ[T]  —— No
< MQ?

Yes

```
Form a group consisting of
T and A_j, remove A_j from    S908
pool A, AN = AN-1
```

**Fig. 9**

1000

Resource merger
determination unit — 1001

Computing task merger
unit — 1002

Merged task assignment
unit — 1003

Grouping unit — 1004

**Fig. 10A**

1001

Processing status
acquisition sub-unit — 1001-1

Merger determination
execution sub-unit — 1001-2

**Fig. 10B**

1003

Stop command sending
sub-unit — 1003-1

Task setting sub-unit — 1003-2

Start command sending
sub-unit — 1003-3

**Fig. 10C**

1100

Input/Output interface — 1102

1104

Internal Storage — CPU — 1101

Network interface — 1103

**Fig. 11**

## REFERENCES CITED IN THE DESCRIPTION

### Non-patent literature cited in the description

- Integrating Scale Out and Fault Tolerance in Stream Processing using Operator State Management. **FERNANDEZ et al.** Proceedings of the 2013 ACM SIGMOD International Conference on Management of Data. ACM, 2013, 725-736